# EUROPEAN PATENT SPECIFICATION

(11) **EP 2 641 990 B1**
(45) Date of publication and mention of the grant of the patent: **20.03.2019**
(21) Application number: 11840864.0
(22) Date of filing: 16.11.2011
(51) Int. Cl.: C22C 38/00, C22C 38/02, C22C 38/04, C22C 38/06, C22C 38/08, C22C 38/12, C22C 38/16, C22C 38/38, C21D 8/02, B21D 22/20, C21D 9/48, B32B 15/01, B21D 11/22, C21D 8/04, C21D 1/20

(54) **HIGHLY FORMABLE HIGH-STRENGTH STEEL SHEET, WARM WORKING METHOD, AND WARM-WORKED AUTOMOTIVE PART**
HOCHFESTES STAHLBLECH MIT HERVORRAGENDER FORMBARKEIT, WARMARBEITSVERFAHREN UND WARMBEARBEITETES AUTOMOBILTEIL
TÔLE D'ACIER À HAUTE RÉSISTANCE AVEC UNE EXCELLENTE APTITUDE AU FORMAGE, PROCÉDÉ DE FORMAGE À CHAUD, ET PIÈCE AUTOMOBILE FORMÉE À CHAUD

(30) Priority: 18.11.2010 JP 2010258152; 22.08.2011 JP 2011180617
(43) Date of publication of application: 25.09.2013
(73) Proprietor: Kabushiki Kaisha Kobe Seiko Sho (Kobe Steel, Ltd.), Kobe-shi, Hyogo 651-8585 (JP)
(72) Inventor: MURAKAMI Toshio, Kobe-shi, Hyogo 651-2271 (JP); KAKIUCHI Elijah, Kobe-shi, Hyogo 651-2271 (JP); HATA Hideo, Kobe-shi, Hyogo 651-2271 (JP); ASAI Tatsuya, Kakogawa-shi, Hyogo 675-0137 (JP); MIZUTA Naoki, Kakogawa-shi, Hyogo 675-0137 (JP)
(74) Representative: Müller-Boré & Partner Patentanwälte PartG mbB
(86) International application number: PCT/JP2011/076442
(87) International publication number: WO 2012/067160

(56) References cited:
- EP-A1- 1 676 932
- WO-A1-2010/029983
- WO-A1-2010/030021
- JP-A- 2004 190 050
- JP-A- 2004 190 050
- JP-A- 2010 065 272
- JP-A- 2010 065 272
- JP-A- 2010 116 593
- JP-A- 2010 116 593
- US-A1- 2005 150 580

## Description

### Technical Field

The present invention relates to highly formable high-strength steel sheets, warm working methods using the high-strength steel sheets, and warm-worked automobile parts. High-strength steel sheets according to the present invention include cold-rolled steel sheets, hot-dip galvanized steel sheets, and hot-dip galvannealed steel sheets.

### Background Art

Thin steel sheets for use in automobile framework parts face demands for higher strengths to improve crashworthiness and fuel efficiency. The steel sheets should therefore surely have satisfactory stamping performance (stamping formability) while having high strengths on the order of 980 MPa or more. Steels utilizing transformation induced plasticity (TRIP) effects are known to be effective for high-strength steel sheets with strengths on the order of 980 MPa or more to ensure both higher strengths and satisfactory formability (see, for example, Patent Literature (PTL) 1).

PTL 1 discloses a high-strength steel sheet including bainite or bainitic ferrite as a main phase and containing retained austenite (γ_{R}) in a content of 3% or more in area percent. This high-strength steel sheet, however, has an elongation of less than 20% at a tensile strength of 980 MPa or more and is demanded to have further improved mechanical properties (hereinafter also simply referred to as "properties").

In contrast, even TRIP-aided steel sheets have limitations in formability in cold forming (cold working). To remedy the disadvantage and to further improve elongation, there have been proposed techniques of warm-working a TRIP-aided steel sheet at a temperature of 100°C to 400°C to exhibit TRIP effects further effectively to thereby improve elongation (see Non Patent Literature (NPL) 1 and PTL 2).

The techniques allow a structure mainly containing bainitic ferrite to further contain retained austenite having a carbon content of 1% by mass or more and thereby allow the resulting steel sheets to have an improved elongation at around 200°C of up to 23% at a tensile strength on the order of 1200 MPa, as indicated in Table 2 of PTL 2. These steel sheets, however, have relatively narrow temperature ranges to ensure satisfactory mechanical properties and are resistant to stable forming upon stamping. JP 2010 065272 A and WO 2010/030021 A1 disclose high strength steel sheets and methods for their manufacture and WO 2010/029983 A1 discloses a high strength steel plate and a manufacturing method thereof.

### Citation List

### Patent Literature

PTL 1: Japanese Unexamined Patent Application Publication (JP-A) No. 2003-193193
PTL 2: JP-A No. 2004-190050

### Non Patent Literature

NPL 1: K Sugimoto; SM Song; J. Sakaguchi; A Nagasaka; and T. Kashima, "Warm Formability of Ultra High-strength Low Alloy TRIP-aided Sheet Steels With Bainitic Ferrite Matrix," TETSU TO HAGANE-JOURNAL OF THE IRONAND STEEL INSTITUTE OF JAPAN, 91(2)34-40(2005)

### Summary of Invention

### Technical Problem

The present invention has been made under such circumstances, and an object thereof is to provide a high-strength steel sheet having better ductility (stamping workability) while surely having a strength on the order of 980 MPa or more. Another object is to provide a warm working method using the high-strength steel sheet. Yet another object is to provide an automobile part which has been warm -worked by the method.

The invention is described in the claims.

### Advantageous Effects of Invention

The present invention can provide a high-strength steel sheet surely having a satisfactory elongation while maintaining a strength on the order of 980 MPa or more in a wide temperature range; a warm working method using the high-strength steel sheet; and an automobile part warm-worked by the method, because the high-strength steel sheet has a structure consisting of bainitic ferrite in a content of 50% to 90%; retained austenite in a content of 3% to 20%; a total of martensite and the retained austenite in a content of 10% to 50%; polygonal ferrite in a content of 0% to 40%; and optionally bainite in a content of 0% to 5%, in area percent based on the entire structure, in which the retained austenite has a carbon content (Cγ_{R}) of 0.5% to 1.2% (in mass percent), and the high-strength steel sheet includes 0.3% (in area percent based on the entire structure) or more of the retained austenite that is surrounded by martensite.

### Brief Description of Drawings

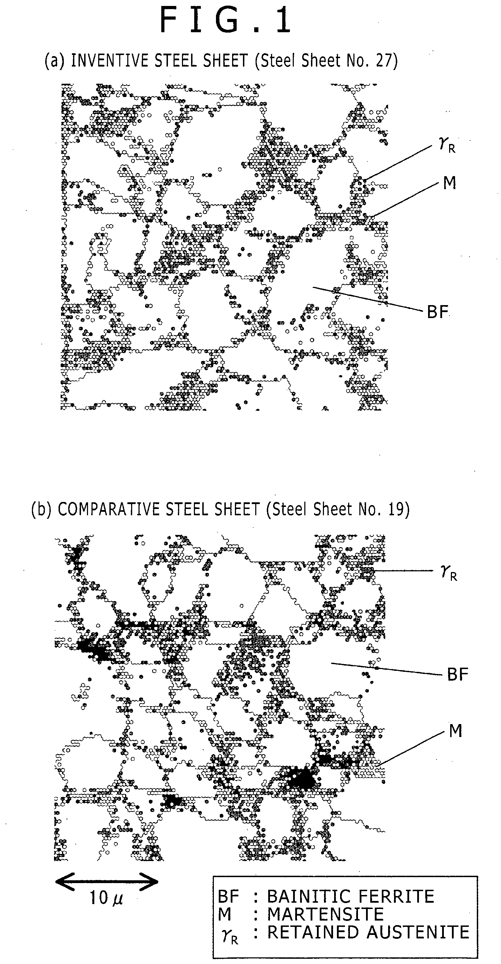

Fig. 1 depicts photographs of cross-sections of a steel sheet according to an embodiment of the present invention (a); and a comparative steel sheet (b).

### Description of Embodiments

As has been described above, the present inventors focused attention on a TRIP-aided steel sheet which contains bainitic ferrite having a substructure (matrix) with a high dislocation density and retained austenite (γ_{R}) as with the background technologies and made intensive investigations to further improve elongation of the steel sheet while ensuring a satisfactory strength.

As a result, the present inventors have found that (1) a satisfactory strength is ensured by partially introducing martensite into the structure; that (2) the elongation is increased through TRIP effects by incorporating 3% or more (in area percent) of retained austenite having a carbon content of 0.5% to 1.2% (in mass percent); and that (3) work hardening in a wide range can be provided by allowing 0.3% or more in area percentage of the retained austenite not to be in contact with matrix bainitic ferrite but to be surrounded by hard martensite, thereby impeding strain to be applied to the retained austenite upon plastic deformation, and facilitating working deformation-induced transformation (strain-induced transformation) even at a later stage of deformation while suppressing strain-induced transformation at early stages of deformation. The present invention has been made based on these findings.

Initially, a structure characterizing a steel sheet according to an embodiment of the present invention (hereinafter also briefly referred to as an "inventive steel sheet") will be illustrated below.

### [Structure of Inventive Steel Sheet]

The inventive steel sheet has a structure based on that of a TRIP-aided steel as with the background technologies, but differs from the background technologies in that the inventive steel sheet contains martensite in a predetermined amount and contains 3% to 20% in area percentage of retained austenite having a carbon content of 0.5% to 1.2% in mass percent; and in that the steel sheet includes 0.3% (in area percent based on the entire structure) or more of the retained austenite that is surrounded by martensite.

### <Bainitic ferrite: 50% to 90%>

The "bainitic ferrite" herein obviously differs from a bainitic structure which has a substructure including a lath-like structure with a high dislocation density and which includes no carbides in the structure. The bainitic ferrite also differs from a polygonal ferrite structure having a substructure with no or very little dislocation density; and differs from a quasi-polygonal ferrite structure having a substructure such as a fine subgrain (see Atlas for Bainitic Microstructures Vol. 1," The Iron and Steel Institute of Japan, Bainite Committee).

Thus, the inventive steel sheet has structures including bainitic ferrite as a matrix and can have better balance between strength and formability, because the bainitic structure is uniform, fine, and ductile, has a high dislocation density, and exhibits a high strength.

The inventive steel sheet includes the bainitic ferrite structure in an amount of 50% to 90% (preferably 60% to 90%; and more preferably 70% to 90%) in area percent based on the entire structure. This allows the bainitic ferrite structure to exhibit the advantages effectively. The amount of the bainitic ferrite structure may be determined in consideration of balance with retained austenite and is recommended to be controlled appropriately so as to exhibit desired properties.

### <Retained austenite (γ_{R}): 3% to 20% in area percent based on entire structure>

Retained austenite is effective for better total elongation. To exhibit the action effectively, retained austenite is contained in an amount of 3% or more (preferably 5% or more, and more preferably 10% or more) in area percent based on the entire structure. However, retained austenite, if present in an excessively large amount, may adversely affect stretch flangeability. To avoid this, the retained austenite is present in an amount of 20% or less.

### <Total of martensite and the retained austenite (γ_{R}): 10% to 50%>

Martensite is partially introduced into the structure for providing a satisfactory strength. However, martensite in an excessively large amount may cause insufficient formability. To avoid this, the total content of martensite and the retained austenite is controlled to 10% or more (preferably 12% or more, and more preferably 16% or more) and 50% or less in area percent based on the entire structure.

### <Polygonal ferrite: 0% to 40%>

Polygonal ferrite is a soft phase and is effective for better ductility. For this reason, the steel sheet may further include polygonal ferrite in a content of 40% or less (preferably 30% or less) in area percent so as to ensure satisfactory strength.

### <Carbon content (Cγ_{R}) of retained austenite (γ_{R}): 0.5% to 1.2% in mass percent>

The carbon content (Cγ_{R}) of retained austenite is an index affecting the stability of transformation of retained austenite to martensite upon working. A retained austenite having an excessively low carbon content Cγ_{R} may be unstable and may cause strain-induced martensitic transformation after the application of stress and before plastic deformation, and this may result in insufficient bulging formability. In contrast, a retained austenite having an excessively high carbon content Cγ_{R} may become excessively stable, and this may impede strain-induced martensitic transformation even upon working, thus resulting in insufficient bulging formability. To provide sufficient bulging formability, the retained austenite has a carbon content Cγ_{R} of 0.5% to 1.2% and preferably 0.6% to 1.1% in mass percent.

### <Retained austenite (γ_{R}) surrounded by martensite: 0.3% or more in area percent based on entire structure>

By allowing martensite to surround part of retained austenite, the residual retained austenite exhibits TRIP effects at relatively early stages of deformation, and the retained austenite surrounded by martensite exhibits TRIP effects due to strain-induced martensitic transformation at a later stage of deformation, because hard martensite surrounding the retained austenite inhibits concentration of strain on the surrounded retained austenite at early stages of deformation. This allows the steel sheet in cold forming to exhibit TRIP effects in a wide strain range and to have a high elongation; and allows the steel sheet in warm forming to include retained austenite with appropriate stability in a wide temperature range and to have a wider temperature range in which a high elongation is obtained.

The retained austenite surrounded by martensite is present in an amount of 0.3% or more in area percent based on the entire structure to develop the TRIP effects in a wide strain range in cold forming and to develop the TRIP effects in a wide temperature range in warm forming.

The inventive steel sheet may include the aforementioned structures alone (as a mixed structure of martensite, bainitic ferrite, polygonal ferrite, and retained austenite), but may further include bainite as another structure within a range not adversely affecting the operation of the present invention. The bainitic structure may inevitably remain in the manufacturing process of the inventive steel sheet, but is minimized and is to be controlled to 5% or less, and more preferably 3% or less, in area percent based on the entire structure.

### [Methods for Measuring Area Percentages of Respective Phases, Carbon Content (Cγ_{R}) of Retained Austenite, and Area Percentage of Retained Austenite Surrounded by Martensite]

Methods for measuring area percentages of respective phases, carbon content (Cγ_{R}) of retained austenite, and area percentage of retained austenite surrounded by martensite will be illustrated below.

Area percentages of respective structures in the steel sheet are measured by subjecting the steel sheet to LePera etching, defining, for example, a white region as "martensite and retained austenite (γ_{R})" through observation with an optical microscope (at 1000-fold magnification), and measuring area percentages of respective structures.

The area percentage and the carbon content (Cγ_{R}) of retained austenite are measured by grinding the steel sheet to a depth of one-fourth the thickness thereof, chemically polishing the ground steel sheet, and measuring the parameters through X-ray diffractometry (ISIJ Int. Vol. 33(1933), No. 7, p. 776). The area percentage of polygonal ferrite is measured in the following manner. The steel sheet is subjected to Nital etching, a massive white region having an equivalent circle diameter of 5 µm or more is identified as polygonal ferrite through observation with an optical microscope (at 400-fold magnification), and whose area percentage is measured. In addition, pearlite and other structures are identified, and whose area percentages are measured through observation with an optical microscope (at 1000-fold magnification), and a region other than the "martensite and retained austenite (γ_{R})," "polygonal ferrite," and "other structures" is defined as bainitic ferrite, and whose area percentage is calculated.

The area percentage of retained austenite surrounded by martensite is determined in the following manner. Initially, the steel sheet is subjected to electron back scatter diffraction (EBSD) pattern analysis at a 0.2 µm pitch using a scanning electron microscope (SEM) in combination with OIM (Orientation Imaging Microscopy (registered trademark)) analyzing system supplied by TexSEM Laboratories, Inc. (TSL); and whereby an FCC phase and a BCC phase are mapped, and, of the BCC phase, grain boundaries each having an orientation difference of 15° or more from an adjacent grain are mapped. In the mapping, regions mapped as the FCC phase are defined and identified as retained austenite. Independently, regions of the BCC phase in which an area of grain boundary having an orientation difference of 15° or more corresponds to five measuring points or less, and regions which are not analyzed (identified) as the FCC phase or BCC phase are defined and identified as martensite. Then, retained austenite fully surrounded by martensite thus identified is determined, defined, and identified as retained austenite surrounded by martensite, and whose area percentage is determined.

Next, chemical compositions constituting the inventive steel sheet will be described. All chemical compositions are indicated in mass percent.

### [Chemical Composition of Inventive Steel Sheet]

### C: 0.05% to 0.3%

Carbon (C) element is essential for obtaining desired major structures (bainitic ferrite, martensite, and retained austenite) while ensuring a high strength. To exhibit these actions effectively, carbon is contained in a content of 0.05% or more, preferably 0.10% or more, and more preferably 0.15% or more. However, a steel sheet containing carbon in a content of more than 0.3% may not be suitable for welding.

### Si: 1% to 3%

Silicon (Si) element effectively inhibits retained austenite from decomposing into carbides. Si is also useful particularly as a solute strengthening element. To exhibit these actions effectively, Si is contained in a content of 1% or more, preferably 1.1% or more, and more preferably 1.2% or more. However, Si, if contained in a content of more than 3%, may impede the formation of bainitic ferrite and martensite structures, may cause the steel sheet to have higher hot deformation resistance, may often cause embrittlement of the resulting weld bead, and may adversely affect the surface quality of the steel sheet. To avoid these, the Si content is 3% in upper limit, and is preferably 2.5% or less, and more preferably 2% or less.

### Mn: 0.5% to 3%

Manganese (Mn) element effectively acts as a solute strengthening element, promotes transformation, and thereby accelerates the formation of bainitic ferrite and martensite structures. This element is also necessary for stabilizing austenite to thereby give a desired retained austenite. To exhibit these actions effectively, Mn is contained in a content of 0.5% or more, preferably 0.7% or more, and more preferably 1% or more. However, Mn, if contained in a content of more than 3%, may cause disadvantages such as slab cracking. The Mn content is preferably 2.5% or less, and more preferably 2% or less.

### P: 0% to 0.1%

Phosphorus (P) element is inevitably present as an impurity element, but may be added to ensure a desired retained austenite. However, phosphorus, if contained in a content of more than 0.1%, may adversely affect secondary workability. The phosphorus content is more preferably 0.03% or less.

### S: 0% to 0.01%

Sulfur (S) element is also present as an impurity element, forms MnS and other sulfide inclusions to cause cracking, and thereby adversely affects workability. To avoid these, the sulfur content is 0.01% or less, and more preferably 0.005% or less.

### Al: 0.001% to 0.1%

Aluminum (Al) element acts as a deoxidizer and, in cooperation with Si, effectively inhibits retained austenite from decomposing into carbides. To exhibit these actions effectively, Al is present in a content of 0.001% or more. However, Al, if present in an excessively high content, may exhibit saturated effects and be economically wasteful. To avoid these, the upper limit of the Al content is 0.1%.

### N: 0.002% to 0.03%

Nitrogen (N) element is inevitably present, but is combined with Al, Nb, and other carbonitride-forming elements to form precipitates, and thereby contributes to higher strengths and finer structures. A steel having an excessively low nitrogen content may suffer from excessively coarsened austenite grains, thereby mainly include an elongated lath-like structure, and have a large aspect ratio of retained austenite. A steel having an excessively high nitrogen content, if being a low carbon steel as in the present invention, may be resistant to casting and may fail to give a steel sheet.

The steel for use herein basically contains the compositions with the balance consisting of iron and inevitable impurities. The steel may further contain one or more of the following compositions within ranges not adversely affecting the operation of the present invention.

At least one element selected from the group consisting of
Cr: 0.01% to 3%;
Mo: 0.01% to 1%;
Cu: 0.01% to 2%;
Ni: 0.01% to 2%; and
B: 0.00001% to 0.01%.

These elements are effective as steel strengthening elements, effectively stabilize retained austenite, and effectively ensure a predetermined amount of retained austenite. To exhibit these actions effectively, it is recommended to add at least one element selected from the group consisting of Cr in a content of 0.01% or more (preferably 0.05% or more); Mo in a content of 0.01% or more (more preferably 0.02% or more); Cu in a content of 0.01% or more (more preferably 0.1% or more); Ni in a content of 0.01% or more (more preferably 0.1% or more); and B in a content of 0.00001% or more (more preferably 0.0002% or more). However, Cr in a content of more than 3%; Mo in a content of more than 1%; Cu and Ni each in a content of more than 2%; and B in a content of more than 0.01% may exhibit saturated effects and be economically wasteful. More preferably, the Cr content is 2.0% or less, Mo content is 0.8% or less, Cu content is 1.0% or less, Ni content is 1.0% or less, and B content is 0.0030% or less.

At least one element selected from the group consisting of
Ca in a content of 0.0005% to 0.01%;
Mg in a content of 0.0005% to 0.01%; and
at least one rare-earth element (REM) in a content of 0.0001% to 0.01%.

These elements control the form of sulfides in the steel and effectively help the steel to have better workability. As used herein the term "rare-earth element" refers to and includes Sc, Y, and lanthanoids. To exhibit the actions effectively, it is recommended to add at least one of Ca and Mg each in a content of 0.0005% or more (more preferably 0.001% or more), and a REM in a content of 0.0001% or more (more preferably 0.0002% or more). However, Ca and Mg each in a content of more than 0.01%; and a REM in a content of more than 0.01% may exhibit saturated effects and be economically wasteful. More preferably, the Ca and Mg contents are each 0.003% or less; and REM content is 0.006% or less.

### [Warm Working Method]

The inventive steel sheet exhibits satisfactory elongation and good deep drawability even at room temperature and is applicable to cold working to be formed into a part. However, it is particularly recommended to heat the steel sheet to an appropriate temperature of from 200°C to 400°C; and to work the heated steel sheet within 3600 seconds (more preferably within 1200 seconds) after the heating.

The working at such a temperature as to optimize the stability of retained austenite before initiation of its decomposition can maximize the elongation and deep drawability.

### [Automotive Part]

Automotive parts worked by the warm working method excel in elongation and deep drawability. Among them, preferred is an automobile part including a mixture of at least one region receiving a true strain of 0.05 or more upon working and at least one region receiving a true strain of less than 0.05 upon working; in which a difference in yield strength between a region receiving a maximum true strain and a region receiving a minimum true strain upon working is 200 MPa or less.

Steel sheets containing retained austenite generally have low yield ratios and high hardening rates at low strains. These steel sheets have strengths after the application of stress, particularly yield strength, varying extremely significantly depending on strain in a region receiving a small strain. When parts are formed by stamping, a strain amount differs from a region to another, and there may be a partial region which receives little strain in the resulting parts. Some parts may therefore suffer from a difference in strength between a region receiving working (strain) and another region receiving substantially no working (strain) and thereby suffer from a strength distribution. A part, if having such a strength distribution, may undergo yield of the low-strength region to thereby undergo deformation or buckling. For this reason, the region or portion with a lowest strength will determine the strength of the part.

Steels containing retained austenite have a low yield strength probably because martensite is formed simultaneously with the introduction of retained austenite and introduces mobile dislocation into the surrounding matrix upon transformation. Accordingly, by inhibiting the dislocation even in a region receiving a small quantity of working, the resulting steel may have a higher yield strength to give a part having a higher strength. The movement of mobile dislocation may be effectively suppressed by heating the material steel to remove mobile dislocation or by fixing the mobile dislocation through strain aging typically of solute carbon, resulting in a higher yield strength.

For these reasons, when a steel sheet containing retained austenite is heated to an appropriate temperature of from 200°C to 400°C and then stamped (warm-worked), even a region receiving small strain can have a higher yield strength. This reduces the strength distribution in the part and allows the part to have a higher strength.

Specifically, of parts including a mixture of at least one region receiving a true strain of 0.05 or more and at least one region receiving a true strain of less than 0.05 each upon the stamping (warm working) in a coexisting manner and thereby having a low-strain region, a part having a difference in yield strength of 200 MPa or less between a region receiving a maximum true strain and a region receiving a minimum true strain has a small strength distribution therein, has a high strength as a whole, and is more advantageous as an automobile part.

Next, a preferred manufacturing method to manufacture an inventive steel sheet will be illustrated below.

### [Preferred Manufacturing Method of Inventive Steel Sheet]

An inventive steel sheet may be manufactured by subjecting a steel having a chemical composition satisfying the above conditions sequentially to hot rolling, cold rolling, and a heat treatment. Manufacturing conditions may be set according to the following concept to allow martensite to surround part of retained austenite. Specifically, bainitic transformation during austempering is controlled at an appropriate stage to control carbon enrichment in untransformed austenite at an appropriate level. In addition, untransformed austenite is controlled to have a larger size (to be coarse). Thus, part of untransformed austenite is transformed to martensite during cooling after austempering, and untransformed austenite remains in the transformed martensite. By this mechanism, martensite is formed during cooling after the completion of austempering so as to surround retained austenite. During this process, austenite, if having an excessively low carbon content, may be transformed to martensite in a larger proportion during cooling, resulting in an insufficient amount of retained austenite. In contrast, most of untransformed austenite, if having an excessively high carbon content, may remain as retained austenite, and this may reduce the amount of retained austenite surrounded by martensite. To allow retained austenite grains to have larger sizes, a coarse initial structure is desirable.

### [Hot Rolling Conditions]

For the above purpose, the finish temperature in hot rolling (finishing mill delivery temperature; FDT) is preferably set to a relatively high temperature of 900°C to 1000°C, and the coiling temperature is preferably set to a relatively high temperature of 600°C to 700°C each compared to those of customary techniques. The resulting hot-rolled steel thereby has a coarse structure as compared to those of customary techniques. Thus, a structure formed as a result of the subsequent heat treatment process may become coarse, resulting in larger sizes of retained austenite grains.

### [Cold Rolling Conditions]

Cold rolling herein is preferably performed to a small cold rolling reduction of 10% to 30% (more preferably 10% to 20%). This may allow a recrystallized structure to be coarse upon heating in the subsequent heat treatment process and allow a reverse-transformed structure to be coarse upon cooling.

### [Heat Treatment Conditions]

To obtain a desired structure, a heat treatment may be performed under conditions below. Specifically, the steel is soaked at a temperature in a (austenite-ferrite) dual phase temperature range or in an austenite single-phase temperature range, the soaked steel is rapidly cooled at a predetermined cooling rate for supercooling, and the cooled steel is held at the supercooling temperature for a predetermined time for austempering. The steel sheet may further be subjected to plating, and, where necessary, further to alloying treatment within ranges not causing significant decomposition of the desired structure and not adversely affecting the operation of the present invention.

Specifically, a heat treatment under following conditions is recommended. For austenitization, the cold-rolled steel after cold rolling is held in a temperature range of [0.6Ac1+0.4Ac3] or higher (preferably [0.5Ac1+0.5Ac3] or higher) and 950°C or lower (preferably 930°C or lower), which temperature range is an (austenite-ferrite) dual phase temperature range or austenite single-phase temperature range, for a duration of 1800 seconds or shorter (preferably 900 seconds or shorter); supercooled by rapidly cooling at an average cooling rate of 7°C/second or more (preferably 10°C/second or more, more preferably 15°C/second or more, and particularly preferably 20°C/second or more) down to a temperature in the range of 350°C to 500°C (preferably 380°C to 480°C, and more preferably 420°C to 460°C);held at the rapid-cooling stop temperature (supercooling temperature) for a duration of 10 to 100 seconds (preferably 20 to 60 seconds) for austempering; and cooled down to room temperature.

Not only by the heat treatment under the recommended conditions, the structure as in the present invention can be obtained also by a heat treatment typically under the following conditions. Specifically, for austenitization, the cold-rolled steel after cold rolling is held in a temperature range of [0.6Ac1+0.4Ac3] or higher (preferably [0.5Ac1+0.5Ac3] or higher) and 950°C or lower (preferably 930°C or lower), which temperature range is an (austenite-ferrite) dual phase temperature range or austenite single-phase temperature range, for a duration of 1800 seconds or shorter (preferably 900 seconds or shorter); supercooled by rapidly cooling at an average cooling rate of 7°C/second or more (preferably 10°C/second or more, more preferably 15°C/second or more, and particularly preferably 20°C/second or more) down to a temperature in the range of 350°C to 500°C (preferably 380°C to 480°C, and more preferably 420°C to 460°C); held at the rapid-cooling stop temperature (supercooling temperature) for a duration of 10 to 100 seconds (preferably 20 to 60 seconds) for austempering (heat treatment conditions of this and precedent steps are the same as above case); subjected to an alloying treatment by reheating in a temperature range of 480°C to 600°C (preferably 480°C to 550°C) for a duration of 1 to 100 seconds; and cooled down to room temperature.

### EXAMPLES

### EXPERIMENTAL EXAMPLE 1

### [Analysis of Effects of Chemical Compositions and Manufacturing Conditions on Mechanical Properties of High-Strength Steel Sheets]

In Experimental Example 1, how mechanical properties of high-strength steel sheets vary depending on chemical compositions and manufacturing conditions was analyzed. Steel specimens having chemical compositions given in Table 1 were made by ingoting in a vacuum to give slabs 30 mm thick, the slabs were subjected to hot rolling and cold rolling under manufacturing conditions given in Table 2, and then heat-treated. Specifically, the slabs were heated to 1200°C, hot-rolled at a finishing mill delivery temperature (FDT) of T1°C to a thickness of t mm, placed in a holding furnace at a coiling temperature of T2°C, air-cooled, and thus coiling of a hot-rolled sheet was simulated. The works were then cold-rolled to a cold rolling reduction of r% and yielded cold-rolled sheets 1.2 mm thick. The cold-rolled sheets were heated at a rate of 10°C/second up to a soaking temperature of T3°C, held at that temperature for 90 seconds, cooled at a cooling rate of R4°C/second, held at a supercooling temperature of T5°C for a duration of t5 seconds, and air-cooled, or held at the supercooling temperature of T5°C for the duration of t5 seconds, further held at a holding temperature of T6°C for a duration of t6 seconds, and air-cooled.

The resulting steel sheets were examined to measure area percentages of respective phases, carbon content (Cγ_{R}) of retained austenite, and area percentage of retained austenite surrounded by martensite by the measuring methods described in "Description of Embodiments." The area percentage of retained austenite surrounded by martensite was measured with a SEM (Model JSM-5410) supplied by JEOL in combination with the OIM Analysis System supplied by TSL.

To evaluate cold and warm mechanical properties, the steel sheets were subjected to measurements of tensile strength (TS) and elongation [total elongation (EL)] at room temperature and 300°C, respectively, by the following procedures.

The tensile strength TS and elongation EL were measured through tensile tests using Japanese Industrial Standards (JIS) No. 5 specimens. The tensile tests were performed at a strain rate of 1 mm/second.

The results are indicated in Tables 3 and 4.

**[Table 1]**

| Steel type | Chemical composition (in mass percent) | | | | | | | | Transformation temperature (°C) | |
|---|---|---|---|---|---|---|---|---|---|---|
| | C | Si | Mn | P | S | Al | N | Other element | Ac1 | Ac3 |
| A | 0.18 | 1.50 | 2.00 | 0.010 | 0.001 | 0.030 | 0.0040 | - | 745 | 850 |
| B | 0.18 | 1.50 | 2.00 | 0.010 | 0.001 | 0.030 | 0.0040 | Ca: 0.010 | 745 | 850 |
| C | 0.18 | 1.50 | 2.00 | 0.010 | 0.001 | 0.030 | 0.0040 | Mg: 0.010 | 745 | 850 |
| Da | 0.03a | 1.50 | 2.00 | 0.010 | 0.001 | 0.030 | 0.0040 | Ca: 0.010 | 745 | 901 |
| Ea | 0.18 | 0.25a | 2.00 | 0.010 | 0.001 | 0.030 | 0.0040 | Ca: 0.010 | 709 | 794 |
| Fa | 0.18 | 4.00a | 2.00 | 0.010 | 0.001 | 0.030 | 0.0040 | Ca: 0.010 | 818 | 962 |
| Ga | 0.18 | 1.50 | 0.40a | 0.010 | 0.001 | 0.030 | 0.0040 | Ca: 0.010 | 758 | 886 |
| Ha | 0.18 | 1.50 | 4.00a | 0.010 | 0.001 | 0.030 | 0.0040 | Ca: 0.010 | 724 | 790 |
| I | 0.18 | 1.50 | 2.00 | 0.010 | 0.001 | 0.030 | 0.0040 | Cr: 0.15, Ca: 0.010 | 745 | 910 |
| J | 0.18 | 1.50 | 2.00 | 0.010 | 0.001 | 0.030 | 0.0040 | Mo: 0.20, Ca: 0.010 | 749 | 848 |
| K | 0.18 | 1.50 | 2.00 | 0.010 | 0.001 | 0.030 | 0.0040 | Cu: 0.50, Ca: 0.010 | 745 | 866 |
| L | 0.18 | 1.50 | 2.00 | 0.010 | 0.001 | 0.030 | 0.0040 | Ni: 0.40, Ca: 0.010 | 745 | 842 |
| M | 0.18 | 1.50 | 2.00 | 0.010 | 0.001 | 0.030 | 0.0040 | B: 0.0010, Ca: 0.010 | 745 | 850 |
| O | 0.08 | 1.00 | 2.80 | 0.010 | 0.001 | 0.030 | 0.0040 | Ca: 0.010 | 722 | 832 |
| P | 0.22 | 1.00 | 1.50 | 0.010 | 0.001 | 0.030 | 0.0040 | Ca: 0.010 | 736 | 833 |
| Q | 0.12 | 2.00 | 2.50 | 0.010 | 0.001 | 0.030 | 0.0040 | Ca: 0.010 | 754 | 873 |
| R | 0.18 | 1.50 | 2.00 | 0.010 | 0.001 | 0.030 | 0.0040 | Ca: 0.010 | 745 | 850 |

| | | | | | | | | | | |
|---|---|---|---|---|---|---|---|---|---|---|
| Data with subscript "a" are out of the ranges specified in the present invention. | | | | | | | | | | |

**[Table 2]**

| Manufacturing number | Steel type | Hot rolling conditions | | | Cold rolling conditions | Heat treatment conditions | | | | | |
|---|---|---|---|---|---|---|---|---|---|---|---|
| | | FDT T1 (°C) | Coiling temperature T2 (°C) | Finish thickness t (mm) | Cold reduction rater (%) | Soaking temperature T3 (°C) | Cooling rate R4 (°C/sec) | Supercooling temperature T5 (°C) | Holding time t5 (sec) | Holding temperature T6 (°C) | Holding time t6 (sec) |
| 1 | A | 950 | 650 | 1.4 | 14 | 920 | 40 | 440 | 40 | 520 | 10 |
| 2 | B | 950 | 650 | 1.4 | 14 | 920 | 40 | 440 | 40 | 520 | 10 |
| 3 | C | 950 | 650 | 1.4 | 14 | 920 | 40 | 430 | 40 | 520 | 10 |
| 4 | Da | 950 | 650 | 1.4 | 14 | 920 | 40 | 460 | 40 | 520 | 10 |
| 5 | Ea | 950 | 650 | 1.4 | 14 | 920 | 40 | 440 | 40 | 520 | 10 |
| 6 | Fa | 950 | 650 | 1.4 | 14 | 920 | 40 | 450 | 40 | 520 | 10 |
| 7 | Ga | 950 | 650 | 1.4 | 14 | 920 | 40 | 450 | 40 | 520 | 10 |
| 8 | Ha | 950 | 650 | 1.4 | 14 | 920 | 40 | 430 | 40 | 520 | 10 |
| 9 | I | 950 | 650 | 1.4 | 14 | 920 | 40 | 440 | 40 | 520 | 10 |
| 10 | J | 950 | 650 | 1.4 | 14 | 920 | 40 | 440 | 40 | 520 | 10 |
| 11 | K | 950 | 650 | 1.4 | 14 | 920 | 40 | 440 | 40 | 520 | 10 |
| 12 | L | 950 | 650 | 1.4 | 14 | 920 | 40 | 440 | 40 | 520 | 10 |
| 13 | M | 950 | 650 | 1.4 | 14 | 920 | 40 | 440 | 40 | 520 | 10 |
| 15 | O | 950 | 650 | 1.4 | 14 | 920 | 40 | 420 | 40 | 520 | 10 |
| 16 | P | 950 | 650 | 1.4 | 14 | 920 | 40 | 440 | 40 | 520 | 10 |
| 17 | Q | 950 | 650 | 1.4 | 14 | 920 | 40 | 440 | 40 | 520 | 10 |
| 18 | R | 950 | 650 | 1.4 | 14 | 920 | 30 | 440 | 40 | 520 | 10 |
| 19b | R | 880b | 400b | 1.4 | 14 | 920 | 40 | 440 | 40 | 520 | 10 |
| 20b | R | 950 | 650 | 2.5 | 52b | 920 | 40 | 440 | 40 | 520 | 10 |
| 21b | R | 950 | 650 | 1.2 | 0b | 780 | 40 | 440 | 40 | 520 | 10 |
| 22b | R | 950 | 650 | 1.4 | 14 | 920 | 5b | 440 | 40 | 520 | 10 |
| 23b | R | 950 | 650 | 1.4 | 14 | 920 | 40 | 440 | 40 | 620b | 10 |
| 24b | R | 950 | 650 | 1.4 | 14 | 920 | 40 | 330b | 40 | 520 | 10 |
| 25b | R | 950 | 650 | 1.4 | 14 | 920 | 40 | 440 | 1800b | 520 | 10 |
| 26 | R | 950 | 650 | 1.4 | 14 | 920 | 40 | 440 | 40 | - | - |
| 27 | R | 950 | 650 | 1.4 | 14 | 920 | 40 | 420 | 40 | 520 | 10 |
| 28 | R | 950 | 650 | 1.4 | 14 | 790 | 40 | 440 | 40 | - | - |
| 29 | R | 950 | 650 | 1.4 | 14 | 790 | 40 | 440 | 40 | 520 | 10 |
| 30 | R | 950 | 650 | 1.4 | 14 | 800 | 40 | 440 | 40 | - | - |
| 31 | R | 950 | 650 | 1.4 | 14 | 800 | 40 | 440 | 40 | 520 | 10 |
| 32 | R | 950 | 650 | 1.4 | 14 | 820 | 40 | 440 | 40 | - | - |
| 33 | R | 950 | 650 | 1.4 | 14 | 820 | 40 | 440 | 40 | 520 | 10 |

| | | | | | | | | | | | |
|---|---|---|---|---|---|---|---|---|---|---|---|
| Data with subscript "a" are out of the ranges specified in the present invention; and data with subscript "b" are out of recommended ranges in the present invention | | | | | | | | | | | |

**[Table 3]**

| Steel sheet number | Steel type | Manufacturing number | Structures | | | | | | | Mechanical properties | | | | | Judgment |
|---|---|---|---|---|---|---|---|---|---|---|---|---|---|---|---|
| | | | Area percentage (%) | | | | | | Cγ_{R} (mass percent) | Cold properties | | Warm properties | | | |
| | | | BF | F | M+γ_{R} | γ_{R} | γ_{R} surrounded by M | Other structure | | TS (MPa) | EL (%) | Temperature (°C) | TS (MPa) | EL (%) | |
| 1 | A | 1 | 70 | 0 | 30 | 7.0 | 1.0 | 0.0 | 0.75 | 1002 | 19.0 | 300 | 1005 | 28.5 | Accepted |
| 2 | B | 2 | 70 | 0 | 30 | 7.0 | 1.0 | 0.0 | 0.75 | 1012 | 18.2 | 300 | 1021 | 28.2 | Accepted |
| 3 | C | 3 | 70 | 0 | 30 | 7.0 | 1.0 | 0.0 | 0.80 | 1008 | 18.2 | 300 | 1019 | 28.2 | Accepted |
| 4 | Da | 4 | 70 | 0 | 20 | 0.5a | 0.1a | 10.0 | 0.30a | 1010 | 8.6a | 300 | 1012 | 10.5a | Rejected |
| 5 | Ea | 5 | 75 | 10 | 15a | 2.0a | 0.2a | 0.0 | 0.25a | 852a | 15.6a | 300 | 841a | 19.4a | Rejected |
| 6 | Fa | 6 | 20a | 25 | 55 | 10.0 | 1.0 | 0.0 | 0.80 | 1230 | 13.0a | 300 | 1239 | 20.2a | Rejected |
| 7 | Ga | 7 | 20a | 60a | 20 | 2.0a | 1.0 | 0.0 | 0.90 | 824a | 25.2 | 300 | 828a | 28.7 | Rejected |
| 8 | Ha | 8 | 30a | 0 | 70a | 5.0 | 1.0 | 0.0 | 1.20 | 1333 | 8.0a | 300 | 1320 | 10.3a | Rejected |
| 9 | I | 9 | 70 | 0 | 30 | 10.0 | 1.2 | 0.0 | 0.85 | 1071 | 21.8 | 300 | 1087 | 29.5 | Accepted |
| 10 | J | 10 | 70 | 0 | 30 | 10.0 | 1.2 | 0.0 | 0.80 | 1049 | 21.8 | 300 | 1067 | 29.3 | Accepted |
| 11 | K | 11 | 70 | 0 | 30 | 10.0 | 1.2 | 0.0 | 0.83 | 1056 | 21.8 | 300 | 1045 | 29.6 | Accepted |
| 12 | L | 12 | 70 | 0 | 30 | 10.0 | 1.2 | 0.0 | 0.80 | 1077 | 21.3 | 300 | 1063 | 29.5 | Accepted |
| 13 | M | 13 | 70 | 0 | 30 | 8.0 | 0.8 | 0.0 | 0.75 | 1067 | 18.6 | 300 | 1058 | 28.5 | Accepted |
| 15 | O | 15 | 80 | 0 | 20 | 6.0 | 0.6 | 0.0 | 0.68 | 983 | 17.8 | 300 | 1002 | 29.1 | Accepted |
| 16 | P | 16 | 70 | 0 | 30 | 10.0 | 1.0 | 0.0 | 0.78 | 1215 | 14.2 | 300 | 1200 | 25.3 | Accepted |

| | | | | | | | | | | | | | | | |
|---|---|---|---|---|---|---|---|---|---|---|---|---|---|---|---|
| Data with subscript "a" are out of the ranges specified in the present invention; and data with subscript "b" are out of recommended ranges in the present invention. BF: Bainitic ferrite, F: Polygonal ferrite, M: Martensite, γ_{R} Retained austenite "Accepted": Having TS of 980 MPa or more and having EL of 17% or more (when having TS of less than 1180 MPa) or EL of 14% or more (when having TS of 1180 MPa or more) as cold properties and having TS of 980 MPa or more and having EL of 28% or more (when having TS of less than 1180 MPa) or EL of 25% or more (when having TS of 1180 MPa or more) as warm properties; "Rejected": Not satisfying the conditions specified as "Accepted." | | | | | | | | | | | | | | | |

**[Table 4]**

| (Continuation of Table 3) | | | | | | | | | | | | | | | |
|---|---|---|---|---|---|---|---|---|---|---|---|---|---|---|---|
| Steel sheet number | Steel type | Manufacturing number | Structures | | | | | | | Mechanical properties | | | | | Judgment |
| | | | Area percentage (%) | | | | | | Cγ_{R} (mass percent) | Cold properties | | Warm properties | | | |
| | | | BF | F | M+γ_{R} | γ_{R} | γ_{R} surrounded by M | Other structure | | TS (MPa) | EL (%) | Temperature (°C) | TS (MPa) | EL (%) | |
| 17 | Q | 17 | 70 | 0 | 30 | 8.0 | 1.0 | 0.0 | 0.85 | 994 | 18.8 | 300 | 988 | 28.5 | Accepted |
| 18 | R | 18 | 65 | 15 | 20 | 8.0 | 1.0 | 0.0 | 0.85 | 1000 | 20.7 | 300 | 1020 | 30.5 | Accepted |
| 19 | R | 19b | 70 | 0 | 30 | 8.0 | 0.2a | 0.0 | 0.82 | 1021 | 16.8a | 300 | 1011 | 23.0a | Rejected |
| 20 | R | 20b | 70 | 0 | 30 | 8.0 | 0.1a | 0.0 | 0.85 | 1018 | 16.3a | 300 | 1024 | 23.5a | Rejected |
| 21 | R | 21b | 5a | 65a | 30 | 7.0 | 0.8 | 0.0 | 0.80 | 837a | 20.8 | 300 | 850a | 27.7a | Rejected |
| 22 | R | 22b | 35a | 50a | 15 | 5.0 | 0.7 | 0.0 | 0.88 | 926a | 18.3 | 300 | 939a | 28.0 | Rejected |
| 23 | R | 23 | 80 | 0 | 20 | 1.5a | 0.1a | 0.0 | 0.68 | 994 | 13.7a | 300 | 1002 | 15.9a | Rejected |
| 24 | R | 24 | 40a | 0 | 50a | 2.0a | 0.1a | 0.0 | 0.43a | 1000 | 13.7a | 300 | 1007 | 20.6a | Rejected |
| 25 | R | 25b | 85 | 0 | 15 | 2.0a | 1.0 | 0.0 | 0.43a | 881a | 18.5 | 300 | 888a | 20.0a | Rejected |
| 26 | R | 26 | 65 | 0 | 35 | 8.0 | 1.0 | 0.0 | 0.85 | 1020 | 18.6 | 300 | 1003 | 30.0 | Accepted |
| 27 | R | 27 | 80 | 0 | 20 | 7.0 | 1.0 | 0.0 | 0.80 | 983 | 19.0 | 300 | 994 | 29.2 | Accepted |
| 28 | R | 28 | 50 | 35 | 15 | 9.0 | 0.8 | 0.0 | 0.75 | 996 | 20.8 | 300 | 1028 | 30.6 | Accepted |
| 29 | R | 29 | 50 | 35 | 15 | 10.0 | 0.8 | 0.0 | 0.75 | 990 | 21.5 | 300 | 1015 | 31.0 | Accepted |
| 30 | R | 30 | 55 | 25 | 20 | 11.0 | 0.8 | 0.0 | 0.80 | 1005 | 20.7 | 300 | 1038 | 32.0 | Accepted |
| 31 | R | 31 | 55 | 25 | 20 | 12.0 | 0.8 | 0.0 | 0.80 | 1002 | 22.0 | 300 | 1030 | 33.0 | Accepted |
| 32 | R | 32 | 65 | 10 | 25 | 10.0 | 0.8 | 0.0 | 0.78 | 1014 | 19.8 | 300 | 1049 | 31.2 | Accepted |
| 33 | R | 33 | 65 | 10 | 25 | 11.0 | 0.8 | 0.0 | 0.78 | 1010 | 20.5 | 300 | 1035 | 32.3 | Accepted |

| | | | | | | | | | | | | | | | |
|---|---|---|---|---|---|---|---|---|---|---|---|---|---|---|---|
| Data with subscript "a" are out of the ranges specified in the present invention; and data with subscript "b" are out of recommended ranges in the present invention. BF: Bainitic ferrite, F: Polygonal ferrite, M: Martensite, γ_{R} Retained austenite "Accepted": Having TS of 980 MPa or more and having EL of 17% or more (when having TS of less than 1180 MPa) or EL of 14% or more (when having TS of 1180 MPa or more) as cold properties and having TS of 980 MPa or more and having EL of 28% or more (when having TS of less than 1180 MPa) or EL of 25% or more (when having TS of 1180 MPa or more) as warm properties; "Rejected": Not satisfying the conditions specified as "Accepted." | | | | | | | | | | | | | | | |

These tables demonstrate that Steel Sheets Nos. 1 to 3, 9 to 13, 15 to 18, and 26 to 33 employed steels having chemical compositions within ranges specified in the present invention, had been manufactured under recommended manufacturing conditions, and acted as inventive steel sheets satisfying conditions in structure specified in the present invention. These steel sheets were found to be highly formable high-strength steel sheets because of having both acceptable cold properties and acceptable warm properties.

In contrast, Steel Sheets Nos. 4 to 8 and 19 to 25 were comparative steel sheets not satisfying at least one of the conditions in chemical composition and structure specified in the present invention and failed to satisfy the criteria in cold properties and warm properties.

Fig. 1 illustrates how retained austenite is distributed in the structures of an inventive steel sheet (Steel Sheet No. 27) and a comparative steel sheet (Steel Sheet No. 19). Fig. 1 depicts results obtained by EBSD measurement, in which a region indicated by a gray or black small hexagon represents retained austenite; a region indicated by an open small hexagon represents martensite; and a region indicated by a wide open area represents matrix bainitic ferrite. Fig. 1 demonstrates that the comparative steel sheet (Steel Sheet No. 19) included retained austenite grains which were mainly connected to each other and basically present in contact with matrix bainitic ferrite; but that the inventive steel sheet (Steel Sheet No. 27) included retained austenite grains, most of which were finely divided and embedded in (surrounded by) fine martensite phases.

### EXPERIMENTAL EXAMPLE 2

### [Analysis of Appropriate Temperature Range in Warm Working]

Next, Steel Sheet No. 27 was subjected to heat treatments at different heating temperatures of from 150°C to 450°C, and warm properties of the resulting articles were measured so as to analyze an appropriate temperature range upon warm working of inventive steel sheets. The results are indicated in Table 5, in which data at a temperature of 300°C are as with the warm properties of Steel Sheet No. 27 in Table 4.

**[Table 5]**

| Temperature (°C) | TS (MPa) | EL (%) | Judgment |
|---|---|---|---|
| 150a | 993 | 17.6a | Rejected |
| 250 | 992 | 28.0 | Accepted |
| 300 | 994 | 29.2 | Accepted |
| 350 | 990 | 28.6 | Accepted |
| 450a | 989 | 13.0a | Rejected |

| | | | |
|---|---|---|---|
| Data with subscript "a" are out of the ranges specified in the warm working method of the present invention. Accepted: Having TS of 980 MPa or more and having EL of 28% (when having TS of less than 1180) MPa or EL of 25% or more (when having TS of 1180 MPa or more). Rejected: Not satisfying the conditions specified in "Accepted." | | | |

Table 5 demonstrates that specimens subjected to a heat treatment at a temperature in the range of from 200°C to 400°C had acceptable warm properties satisfying the criteria and exhibited superior warm formability in a wide temperature range, whereas specimens subjected to a heat treatment at a temperature of lower than 200°C or higher than 400°C failed to satisfy the criteria in warm properties.

### EXPERIMENTAL EXAMPLE 3

### [Analysis of How Working Temperature Affects Strength Variation in Parts]

Specimens of Steel Sheet No. 27 were held at room temperature and 300°C, respectively, as intact (true strain: 0%) without working through application of true strain, or subjected to working to apply 5% true strain at room temperature and 300°C, respectively. The resulting samples were subjected to tensile tests at room temperature again, whereby yield strengths (YS) of the specimens were measured. These were performed to examine how the working temperature affects the strength variation due to strain distribution in parts obtained by working of inventive steel sheets. The results are indicated in Table 6.

**[Table 6]**

| Working temperature (°C) | Yield strength YS1 of As-is specimen (MPa) | Yield strength YS2 of 5%-worked specimen (MPa) | YS2-YS1 (MPa) |
|---|---|---|---|
| Room temperature | 580 | 890 | 310 |
| 300 | 720 | 880 | 160 |

Table 6 demonstrates that a part obtained by warm-working of the inventive steel sheet had a smaller variation in yield strength due to difference in working magnitude in the part and thereby had a higher strength as a part, as compared to a part obtained by cold working.

### Industrial Applicability

The present invention is applicable to cold-rolled steel sheets, hot-dip galvanized steel sheets, and hot-dip galvannealed steel sheets to give steel sheets having high strengths and satisfactory workability, and the resulting steel sheets are advantageously usable typically for automobile framework parts.

## Claims

1. A highly formable high-strength steel sheet having a chemical composition consisting of:
C in a content of 0.05% to 0.3%;
Si in a content of 1% to 3%;
Mn in a content of 0.5% to 3%;
P in a content of 0% to 0.1%;
S in a content of 0% to 0.01%;
Al in a content of 0.001% to 0.1%;
N in a content of 0.002% to 0.03%;
optionally, at least one element selected from the group consisting of:
Cr in a content of 0.01% to 3%;
Mo in a content of 0.01% to 1%;
Cu in a content of 0.01% to 2%;
Ni in a content of 0.01% to 2%; and
B in a content of 0.00001% to 0.01%;
optionally, at least one element selected from the group consisting of:
Ca in a content of 0.0005% to 0.01%;
Mg in a content of 0.0005% to 0.01%; and
a rare-earth element (REM) in a content of 0.0001% to 0.01%,
in mass percent,
with the balance consisting of iron and inevitable impurities;
wherein the steel sheet has a structure consisting of:
bainitic ferrite in a content of 50% to 90%;
retained austenite in a content of 3% to 20%;
a total of martensite and the retained austenite in a content of 10% to 50%;
polygonal ferrite in a content of 0% to 40%; and
optionally bainite in a content of 0% to 5%,
in area percent based on the entire structure;
wherein the retained austenite has a carbon content (C_{γR}) of 0.5% to 1.2% in mass percent;
wherein the steel sheet comprises 0.3%, in area percent based on the entire structure, or more of the retained austenite that is surrounded by martensite;
wherein at room temperature, the tensile strength is 980 MPa or more, and the elongation is 17% or more when the tensile strength is less than 1180 MPa, and the elongation is 14% or more when the tensile strength is equal to or more than 1180 MPa; and
wherein the steel sheet is cold-rolled, and optionally galvanized or galvannealed.

2. A method of warm-working a high-strength steel sheet, the method comprising the steps of heating the high-strength steel sheet of claim 1 up to a temperature of 200°C to 400°C; and stamping the high-strength steel sheet within 3600 seconds after the heating,
wherein the heat-treated and stamped high-strength steel sheet has a tensile strength of 980 MPa or more, and an elongation of 28% or more when the tensile strength is less than 1180 MPa, and an elongation of 25% or more when the tensile strength is equal to or more than 1180 MPa.

3. An automobile part worked by the method of claim 2, wherein the automobile part comprises a mixture of at least one region receiving a true strain of 0.05 or more and at least one region receiving a true strain of less than 0.05 upon working; and a difference in yield strength between a region receiving a maximum true strain and a region receiving a minimum true strain upon working is 200 MPa or less.

## Patentansprüche

1. In hohem Maße formbares, hochfestes Stahlblech mit einer chemischen Zusammensetzung, bestehend aus:
C in einem Gehalt von 0,05% bis 0,3%;
Si in einem Gehalt von 1% bis 3%;
Mn in einem Gehalt von 0,5% bis 3%;
P in einem Gehalt von 0% bis 0,1%;
S in einem Gehalt von 0% bis 0,01%;
Al in einem Gehalt von 0,001% bis 0,1%;
N in einem Gehalt von 0,002% bis 0,03%;
gegebenenfalls mindestens einem Element, ausgewählt aus der Gruppe, bestehend aus:
Cr in einem Gehalt von 0,01% bis 3%;
Mo in einem Gehalt von 0,01% bis 1%;
Cu in einem Gehalt von 0,01% bis 2%;
Ni in einem Gehalt von 0,01% bis 2%; und
B in einem Gehalt von 0,00001 % bis 0,01%;
gegebenenfalls mindestens einem Element, ausgewählt aus der Gruppe, bestehend aus:
Ca in einem Gehalt von 0,0005% bis 0,01%;
Mg in einem Gehalt von 0,0005% bis 0,01%; und
einem Seltenerdelement (REM) in einem Gehalt von 0,0001 % bis 0,01%,
in Massenprozent,
wobei der Rest aus Eisen und unvermeidlichen Verunreinigungen besteht;
wobei das Stahlblech eine Struktur aufweist, bestehend aus:
bainitischem Ferrit in einem Gehalt von 50% bis 90%;
Restaustenit in einem Gehalt von 3% bis 20%;
einer Gesamtmenge von Martensit und dem Restaustenit in einem Gehalt von 10% bis 50%;
polygonalem Ferrit in einem Gehalt von 0% bis 40%; und
gegebenenfalls Bainit in einem Gehalt von 0% bis 5%,
in Flächenprozent, bezogen auf die Gesamtstruktur;
wobei der Restaustenit einen Kohlenstoffgehalt (C_{γR}) von 0,5% bis 1,2% in Massenprozent aufweist;
wobei das Stahlblech 0,3%, in Flächenprozent, bezogen auf die Gesämtstruktur, oder mehr des Restaustenits, welcher von Martensit umgeben ist, umfasst; wobei bei Raumtemperatur die Zugfestigkeit 980 MPa oder mehr beträgt und die Dehnungsfähigkeit 17% oder mehr beträgt, wenn die Zugfestigkeit weniger als 1180 MPa beträgt, und die Dehnungsfähigkeit 14% oder mehr beträgt, wenn die Zugfestigkeit gleich oder mehr als 1180 MPa beträgt; und
wobei das Stahlblech kaltgewalzt und gegebenenfalls galvanisiert oder galvanisiert und vergütet ist.

2. Verfahren zur Wärmebearbeitung eines hochfesten Stahlblechs, wobei das Verfahren die Schritte des Erwärmens des hochfesten Stahlblechs nach Anspruch 1 bis auf eine Temperatur von 200°C bis 400°C; und des Stanzens des hochfesten Stahlblechs innerhalb von 3600 Sekunden nach dem Erwärmen umfasst,
wobei das wärmebehandelte und gestanzte hochfeste Stahlblech eine Zugfestigkeit von 980 MPa oder mehr aufweist sowie eine Dehnungsfähigkeit von 28% oder mehr, wenn die Zugfestigkeit weniger als 1180 MPa beträgt, und eine Dehnungsfähigkeit von 25% oder mehr, wenn die Zugfestigkeit gleich oder mehr als 1180 MPa beträgt.

3. Automobilteil, bearbeitet durch das Verfahren nach Anspruch 2, wobei das Automobilteil ein Gemenge aus mindestens einem Bereich, welcher eine wahre Dehnung von 0,05 oder mehr erfährt, und mindestens einem Bereich, welcher eine wahre Dehnung von weniger als 0,05 erfährt, nach der Bearbeitung umfasst; und ein Unterschied in der Streckfestigkeit zwischen einem Bereich, welcher einen Maximalwert der wahren Dehnung erfährt, und einem Bereich, welcher einen Minimalwert der wahren Dehnung erfährt, nach der Bearbeitung 200 MPa oder weniger beträgt.

## Revendications

1. Tôle d'acier à haute résistance et hautement formable ayant une composition chimique consistant en :
C dans une teneur de 0,05% à 0,3% ;
Si dans une teneur de 1% à 3% ;
Mn dans une teneur de 0,5% à 3% ;
P dans une teneur de 0% à 0,1% ;
S dans une teneur de 0% à 0,01% ;
Al dans une teneur de 0,001% à 0,1% ;
N dans une teneur de 0,002% à 0,03% ;
optionnellement, au moins un élément sélectionné parmi le groupe consistant en :
Cr dans une teneur de 0,01% à 3% ;
Mo dans une teneur de 0,01% à 1% ;
Cu dans une teneur de 0,01% à 2% ;
Ni dans une teneur de 0,01% à 2% ; et
B dans une teneur de 0,00001% à 0,01% ;
optionnellement, au moins un élément sélectionné parmi le groupe consistant en :
Ca dans une teneur de 0,0005% à 0,01% ;
Mg dans une teneur de 0,0005% à 0,01% ; et
un élément terre rare dans une teneur de 0,0001% à 0,01% ;
en pourcentage en masse ;
le reste consistant en du fer et d'inévitables impuretés ;
dans laquelle la tôle d'acier a une structure consistant en :
ferrite bainitique dans une teneur de 50% à 90% ;
austénite de trempe dans une teneur de 3% à 20% ;
un total de martensite et de l'austénite de trempe dans une teneur de 10% à 50% ;
ferrite polygonale dans une teneur de 0% à 40% ; et
optionnellement du bainite dans une teneur de 0% à 5%,
en pourcentage en surface sur base de l'entièreté de la structure ;
dans laquelle l'austénite de trempe a une teneur en carbone (C_{γR}) de 0,5% à 1,2% en pourcentage en masse ;
dans laquelle la tôle d'acier comprend 0,3% ou plus, en pourcentage en surface sur base de l'entièreté de la structure, d'austénite de trempe qui est entourée de martensite ;
dans laquelle, à température ambiante, la résistance à la traction est de 980 Mpa ou plus, et l'élongation est de 17% ou plus quand la résistance à la traction est inférieure à 1180 MPa, et l'élongation est de 14% ou plus quand la résistance à la traction est égale ou supérieure à 1180 MPa ; et
dans laquelle la tôle d'acier est laminée à froid, et optionnellement galvanisée ou recuite après galvanisation.

2. Procédé de travail à chaud d'une tôle d'acier à haute résistance, le procédé comprenant les étapes de chauffage de la tôle d'acier à haute résistance de la revendication 1 jusqu'à une température de 200°C à 400°C ; et un estampage de la tôle d'acier à haute résistance dans un délai de 3600 secondes après le chauffage,
dans lequel la tôle d'acier à haute résistance traitée à chaud et estampée a une résistance à la traction de 980 MPa ou plus, et une élongation de 28% ou plus quand la résistance à la traction est inférieure à 1180 MPa, et une élongation de 25% ou plus quand la résistance à la traction est égale ou supérieure à 1180 MPa.

3. Pièce automobile travaillée par le procédé de la revendication 2, dans laquelle la pièce automobile comprend un mélange d'au moins une région recevant une déformation réelle de 0,05 ou plus et au moins une région recevant une déformation réelle inférieure à 0,05 lors du travail ; et une différence de limite d'élasticité entre une région recevant une déformation réelle maximale et une région recevant une déformation réelle minimale lors du travail est de 200 MPa ou moins.
